# EUROPÄISCHE PATENTANMELDUNG

(11) **EP 3 000 363 A1**
(43) Veröffentlichungstag der Anmeldung: **30.03.2016**
(21) Anmeldenummer: 14186265.6
(22) Anmeldetag: 24.09.2014
(51) Int. Cl.: A47J 31/44

(54) **Milchschäumergerät, Getränkezubereitungssystem und Getränkezubereitungsmaschine**

(71) Anmelder: Qbo Coffee GmbH, 8304 Wallisellen (CH)
(72) Erfinder: Balkau, Werner, 8762 Schwändi (CH)
(74) Vertreter: Frei Patent Attorneys

(57) **Zusammenfassung**

Das Gerät (1) zum Zubereiten von geschäumter Milch weist einen Behälter (5) zum Aufnehmen von Milch und ein elektrisch betriebenes Antriebsmittel zum Fördern und/oder Schäumen der Milch auf. Es zeichnet sich durch ein Andockelement zum Anschliessen an eine Getränkezubereitungsmaschine (101) aus, welches Andockelement enthält:
- Einen Anschluss für von der Getränkezubereitungsmaschine abgegebenen Wasserdampf;
- Eine Schnittstelle für von der Getränkezubereitungsmaschine abgegebenen elektrischen Strom; und
- Einen Milchschaumauslauf (28) für die geschäumte Milch.

## Beschreibung

Die Erfindung betrifft das Gebiet der Geräte zum Zubereiten von Getränken. Sie betrifft insbesondere ein Gerät zum Erzeugen von Milchschaum und von Milchgetränken, ein Getränkezubereitungssystem sowie eine Getränkezubereitungsmaschine.

Milchschäumergeräte als integrierte Module von Kaffeemaschinen oder als an Kaffeemaschinen andockbare separate Geräte sind bekannt. EP 2 047 779 zeigt eine Kaffeemaschine mit andockbarem Milchmodul, wobei heisser Dampf aus der Kaffeemaschine genutzt wird, um nach dem Venturi-Prinzip aus einem Gefäss des Milchmoduls angesaugte Milch zu schäumen. Die geschäumte Milch wird über einen schwenkbaren Arm abgegeben. EP 2 220 973 zeigt eine Kaffeemaschine mit einer Abgabevorrichtung für Milchschaum. Die Wirkungsweise der Abgabevorrichtung basiert ebenfalls auf dem Venturi-Effekt, aufgrund dessen Milch durch in eine Venturidüse injizierten heissen Dampf aus einem separaten Gefäss angesaugt, mit Luft verwirbelt und so aufgeschäumt wird. Die Abgabevorrichtung ist in das Gehäuse des Kaffeeauslaufs integriert, ist aber so angeordnet, dass Milch nicht weiter ins Innere der Kaffeemaschine geführt werden muss, so dass ihre Teile separat gereinigt werden können. Trotzdem beruht das Prinzip darauf, dass Milch im Innern des Kaffeemaschinengehäuses verarbeitet wird, was die Reinigung durch den Benutzer aufwändiger macht.

Die vorstehend beschriebenen, auf dem Venturiprinzip beruhenden Lösungen können nur heissen Milchschaum zubereiten. Oft wird jedoch auch die Zubereitung von kaltem Milchschaum gewünscht. WO 2014/044407 zeigt eine Vorrichtung zur wahlweisen Zubereitung von kaltem oder warmem Milchschaum, die für die Erzeugung des warmen Milchschaums an den Dampfauslass einer Getränkezubereitungsmaschine angekoppelt werden kann. Die Vorrichtung verfügt über einen eigenen Stromversorgungsanschluss. WO 2011/144647 zeigt eine Kaffeemaschine mit einem auf einem Sockel der Kaffeemaschine angeordneten, herausnehmbaren, elektrisch angetriebenen Milchzubereitungsmodul. Das Modul wird über einen Sockel der Kaffeemaschine angesteuert und mit Strom versorgt. Das Modul verfügt über einen Ausguss, durch welchen die zubereitete, insbesondere geschäumte Milch nach Herausnahme des Moduls in ein Gefäss gefüllt werden kann. Bei diesen Lösungen muss der Benutzer den Milchschaum vom Heissgetränk separat herstellen und gegebenenfalls selbst mit einem Heissgetränk - insbesondere Kaffee - mischen.

Es ist eine sich der vorliegenden Erfindung stellende Aufgabe, ein Gerät zum Erzeugen von Milchschaum zur Verfügung zu stellen, welches Nachteile des Standes der Technik überwindet und welches zum Zusammenwirken mit einem Gerät zur Zubereitung von Heissgetränken, insbesondere mit einer Kaffeemaschine optimiert ist. Eine weitere Aufgabe ist das Zurverfügungstellen einer entsprechenden mit dem Gerät zusammenwirkenden Getränkezubereitungs-, insbesondere Kaffeemaschine sowie eines Systems mit einem Gerät zum Erzeugen von Milchschaum und einer Getränkezubereitungsmaschine.

Diese Aufgabe wird gelöst durch das in den Patentansprüchen definierte Gerät, die in den Patentansprüchen definierte Getränkezubereitungsmaschine sowie das in den Patentansprüchen definierte System.

Das Gerät zum Zubereiten von geschäumter Milch weist einen Behälter zum Aufnehmen von Milch und ein elektrisch betriebenes Antriebsmittel zum Fördern und/oder Schäumen der Milch auf. Es zeichnet sich durch ein Andockelement zum Anschliessen an eine Getränkezubereitungsmaschine aus, welches Andockelement enthält:
- Einen Anschluss für von der Getränkezubereitungsmaschine abgegebenen Wasserdampf;
- Eine Schnittstelle für von der Getränkezubereitungsmaschine abgegebenen elektrischen Strom; und
- Einen Milchschaumauslauf für die geschäumte Milch.

Aufgrund dieses Vorgehens ist eine besonders kompakte, einfach zu handhabende und praktische Kopplung zwischen Getränkezubereitungsmaschine und Milchschäumergerät möglich. Indem das Andockelement auch den Milchschaumauslauf enthält, kann dieser insbesondere sehr nahe bei der Getränkezubereitungsmaschine und bei entsprechender Ausgestaltung dieser nahe bei deren Getränkeauslauf liegen. So kann insbesondere der Abstand zwischen dem Milchschaumauslauf und dem Getränkeauslauf so sein, dass ein Trinkgefäss üblicher Abmessungen - bspw. eine Kaffeetasse oder ein Latte-Macchiato-Glas - unter beiden diesen Ausläufen abgestellt werden.

Typische Trinkgefässe für Heissgetränke mit Milch haben einen Durchmesser von 6-8 cm oder mehr. Das Getränkezubereitungssystem mit dem Milchschäumergerät und der Getränkezubereitungsmaschine ist bevorzugt so ausgestaltet, dass der Abstand zwischen dem Heissgetränkeauslauf und dem Milchschaumauslauf so klein ist, dass ein solches Gefäss in ein- und derselben Position mit dem Heissgetränk und der geschäumten Milch befüllt werden kann. Der Abstand zwischen dem Heissgetränkeauslauf und dem Milchschaumauslauf beträgt daher bevorzugt maximal 5 cm, insbesondere maximal 4 cm oder maximal 3 cm. Mit Abstand ist hier der horizontale Abstand, d.h. der Abstand der Austrittspunkte des Getränks bzw. der geschäumten Milch in einer Projektion entlang der Vertikalen auf eine horizontale Ebene gemeint. Für das Milchschäumergerät kann das heissen, dass ein Abstand zwischen dem Milchschaumauslauf einerseits und einer Endfläche des Andockelements andererseits, welche Endfläche den Anschluss für den Wasserdampf und die elektrische Schnittstelle enthält, maximal 2.5 cm, insbesondere maximal 2 cm oder maximal 1.5 cm beträgt.

Das Andockelement kann bspw. als zusammenhängendes körperhaftes Element ausgebildet sein, in dessen Innern Leitungen für die Milch und den Wasserdampf verlaufen. In einer Ausführungsform weist es einen Körper auf, wobei die genannten Leitungen als Öffnungen in diesem Andockelementkörper ausgebildet oder in diesen als separate Schläuche oder Rohre vorhanden sind. Zusätzlich kann es ein Gehäuse aufweisen. Leiter für den elektrischen Strom verlaufen dann beispielsweise am Gehäuse, im Gehäuse, und/oder zwischen dem Gehäuse und dem Körper.

In Ausführungsformen weist der Andockelement-Körper einen Grundkörper mit einer Mehrzahl von Fluidkanälen und ein vom Grundkörper reversibel entfernbares Ergänzungsteil auf, wobei das Ergänzungsteil ein im Vergleich zum Grundkörper weicheres Material aufweist, zusammenhängend ist und mehrere in die Fluidkanäle eingreifende, von Milch, Wasserdampf, Wasser und/oder Luft durchströmbare Elemente aufweist.

Das Ergänzungsteil kann in diesen Ausführungsformen insbesondere einstückig aus einem elastisch verformbaren, vergleichsweise weichen Material aufgebaut sein. "Elastisch verformbar" heisst hier bspw., dass das Material von einem Durchschnittsbenutzer manuell ohne Hilfsmittel und ohne übergrossen Kraftaufwand substantiell verformt werden kann.

Das Ergänzungsteil kann beispielsweise als Silikonteil ausgebildet sein. Wie an sich bekannt sind Silikone für Anwendungen im Lebensmittelbereich geeignet, weil sie nebst ihrer Verformbarkeit auch gut erhitzbar und inert sind und daher gut gereinigt werden können, beispielsweise auch in der Spülmaschine.

Das Ergänzungsteil kann insbesondere den Grundkörper mindestens teilweise umgreifend angeordnet und von diesem abwickelbar sein. Es kann eine flächige oder zweidimensional-gerüstartige Basis und daran die durchströmbaren Elemente aufweisen. Die Basis des Ergänzungsteils ist dabei gefaltet und/oder gebogen um den Grundkörper gelegt.

Eine solche Basis des Ergänzungsteils kann insbesondere aus flächigen Abschnitten mit zwischen den flächigen Abschnitten angeordneten Gelenken ausgebildet sein; solche Gelenke können durch Rillen und/oder Ausnehmungen in der Basis gebildet sein und als Drehgelenke (Scharniere) mit nur einem Freiheitsgrad ausgebildet sein. Die Richtungen, in welche die verschiedenen Elemente durchströmt werden, können sich unterscheiden, bspw. indem die Elemente an verschiedenen Seiten des Grundkörpers vorhanden sind.

In Ausführungsformen ist das Ergänzungsteil insbesondere so ausgebildet, dass sie unter anderem an zwei gegenüberliegende Seiten des Grundkörpers anliegt und bspw. Elemente der erwähnten Art aufweist.

In Ausführungsformen ist unter den Elementen mindestens eine Düse und/oder ein Ventil, d.h. das Ergänzungsteil bildet mindestens eine Düse und/oder ein Ventil. Die Düse bzw. das Ventil kann ganz oder teilweise in einen Fluidkanal im Grundkörper hineinragen oder einen in einen solchen Kanal hineinragenden Kragen aufweisen. Ein Beispiel eines Ventils ist ein Lippenventil (englisch: "Duckbill valve").

Solche Elemente in der Form einer Düse und/oder eines Ventils bilden aufgrund ihrer Funktion Verengungen, und der Teil des Fluidkanals hinter einer solchen Verengung ist schwierig zu reinigen. Eine regelmässige gründliche Reinigung ist jedoch wichtig für Elemente, die mit Milch in Kontakt kommen. Das erfindungsgemässe Vorgehen ermöglicht, diese Elemente auf einfache Art für die Reinigung zu entfernen und freizulegen, indem die Anbaueinheit vom Grundkörper getrennt wird. Weil das Ergänzungsteil die mehreren Elemente aufweist, bleiben sie trotzdem auch für die Reinigung zusammenhängend, gehen nicht verloren und sind auf einfache Art wieder einsetzbar, und zwar ohne dass Falschmontagen möglich sind.

Der Grundkörper kann beispielsweise aus einem Kunststoff gefertigt und beispielsweise im Spritzgussverfahren hergestellt sein; auch andere Materialien und Herstellungsverfahren, bspw. keramische Materialien oder Edelstahl, kommen in Frage. Der Grundkörper kann einstückig sein; das ist jedoch keine Notwendigkeit. Bspw. kann der Grundkörper aus einem Materialblock gefertigt sein, wobei die Fluidkanäle mit einem Material verkleidet sein können, das sich vom Material des Materialblocks unterscheidet. Es ist auch nicht ausgeschlossen, dass im zusammengesetzten Zustand die durchströmbaren Elemente des Ergänzungsteils so weit in die jeweiligen Fluidkanäle eingreifen, dass diese auch eine Verkleidung der Fluidkanäle bilden und mindestens bereichsweise einen Kontakt zwischen dem Fluid und dem Grundkörper verhindern.

Nebst dem Vorteil der einfachen Handhabung für die Reinigung und für das wieder zusammensetzen nach erfolgter Reinigung weist das Vorgehen auch den Vorteil der effizienten Herstellbarkeit auf.

In alternativen Ausführungsformen kann der Andockelement-Körper auch einstückig ausgebildet sein, gegebenenfalls mit weicheren Einsetzteilen für eventuell benötigte separate Ventile.

Das Andockelement kann im zusammengesetzten Zustand des Getränkezubereitungssystems zwischen der Getränkezubereitungsmaschine und einem Hauptteil des Milchschäumergeräts verlaufen, und zwar oberhalb des Getränkeauslaufs. Eine Endfläche des Andockelements zum in-Kontakt-Bringen mit einer entsprechenden Partie der Getränkezubereitungsmaschine kann bspw. im Wesentlichen Vertikal sein. Das Andockelement kann eine im Wesentlichen zylindrische Form mit einer horizontalen, zu einer Endfläche senkrechten Zylinderachse und einem beliebigen, beispielsweise im Wesentlichen rechteckigen Querschnitt haben.

Das Milchschäumergerät weist beispielsweise eine Mischdüse auf, in welcher der Wasserdampf mit der Milch und beispielsweise zur Zubereitung von warmer geschäumter Milch auch mit Luft zusammengeführt wird. In Ausführungsformen kann die Mischdüse im Andockelement angeordnet sein. Insbesondere kann die Mischdüse unmittelbar oberhalb des Milchschaumauslaufs angeordnet sein, d.h. die geschäumte Milch gelangt unmittelbar von der Mischdüse in den Milchschaumauslauf.

Der Milchschaumauslauf kann eine sich gegen unten verjüngende Milchschaumauslaufkammer bilden. In eine solchen wird der Milchschaum der geschäumten Milch weiter homogenisiert und kanalisiert.

In Ausführungsformen bewirkt die Strömung des Dampfs - der vom Dampfanschluss in die Mischdüse gelangt - in an sich bekannter Art das Ansaugen von Luft und die Durchmischung mit der Mischdüse zugeführter Milch, wodurch geschäumte Milch erzeugbar ist, welche aufgrund der vom Wasserdampf abgegebenen Wärme - die hauptsächlich, aber nicht ausschliesslich, als Kondensationswärme an die Milch abgegeben wird - warm ist. Diese Saugwirkung kann auf dem Bernoulli-Gesetz beruhen (wobei dann die Mischdüse bspw. als Venturi-Düse ausgebildet sein kann) und/oder auf Impulsübertragung basieren, wie das in Kombination für sogenannte "Strahlpumpen" an sich bekannt ist.

Der über die Schnittstelle abgegebene elektrische Strom dient dem Antrieb eines aktiven Element des Milchschäumergeräts, insbesondere einer Pumpe und im Speziellen einer Pumpe als Teil einer Milchschäumeinheit zum Zubereiten auch kalten Milchschaums.

Insbesondere kann das Milchschäumergerät eine Zahnradpumpe aufweisen. Zum Zweck der Zubereitung von geschäumter Milch ist die Zahnradpumpe eingangsseitig mit einer Milchzuführleitung und einer Luftzuführung verbunden.

Die Milchschäumeinheit kann optional so eingerichtet sein dass ein Betriebsparameter abhängig von einem Messwert und/oder einer Benutzereingabe verstellt wird. Mit "Verstellen" ist hier die Einflussnahme auf den mindestens einen Betriebsparameter der Milchschäumeinheit gemeint, welcher beeinflusst, wie diese während eines aktiven Milchschäumbetriebs wirkt; die Verstellbarkeit ist also verschieden von einem blossen "ein/aus", wie das aus dem Stand der Technik bekannt ist. Die Verstellbarkeit erfolgt insbesondere derart, dass ein vom Benutzer vorgegebener oder und/oder einer Steuerung vorgegebener Parameter einen Einfluss auf die Eigenschaften und/oder Quantität des erzeugten Milchschaums hat. Ein verstellbarer Betriebsparameter kann insbesondere eine Drehzahl der Zahnradpumpe oder die zugeführte Luftmenge (regelbar beispielsweise durch eine Ventileinheit mit einstellbarer Ventilöffnung) sein.

Zusätzlich zum genannten Anschluss für den Wasserdampf kann das Andockelement einen weiteren Anschluss für von der Getränkezubereitungsmaschine abgegebenes, beispielsweise heisses, Wasser und/oder für Wasserdampf aufweisen, welches Wasser bzw. welcher Dampf zum Durchspülen und zur Reinigung verwendbar ist. Von diesem Anschluss für das Reinigungswasser bzw. den Reinigungsdampf aus kann eine das Andockelement durchquerende Leitung vorhanden sein. Diese mündet beispielsweise in die Milchschäumeinheit und dient gegebenenfalls dem Durchspülen und unter Umständen auch Entkeimen der Zahnradpumpe inklusive Zuund Wegführleitungen.

Eine Getränkezubereitungsmaschine, insbesondere Kaffeemaschine eines Getränkezubereitungssystems der hier beschriebenen Art kann als Maschine der oft "Kapselmaschine" genannten Art mit einer Brühkammer zum Einlegen einer Portionenkapsel mit einem Extraktionsgut und zum Brühen eines Heissgetränks (Kaffee oder eventuell Tee oder ein anderes Heissgetränk) aus diesem Extraktionsgut und Wasser ausgebildet sein. Sie kann aber auch bspw. als vollautomatische Kaffeemaschine mit Mahlwerk oder als Kolbenmaschine zur Aufnahme von Kaffeepulver ausgebildet sein.

Die Getränkezubereitungsmaschine weist bspw. einen Wasserbehälter, eine Wasserpumpe und einen Wassererhitzer auf. Weiter ist eine Brühkammer zum Zubereiten des Heissgetränks aus erhitztem Wasser durch Extraktion aus einem Extraktionsgut vorhanden.

Die Getränkezubereitungsmaschine ist so ausgebildet, dass das Milchschäumergerät an sie andockbar ist, indem eine Dampfabgabestelle und eine maschinenseitige elektrische Schnittstelle vorhanden und relativ nahe beieinander und so angeordnet sind, dass das Andockelement durch eine einzige vorgegebene Bewegung oder einen Bewegungsablauf (ohne relativ zueinander bewegte Teile) andockbar ist.

Die Andockstelle mit Dampfabgabestelle und maschinenseitiger elektrischer Schnittstelle kann insbesondere in unmittelbarer Nähe des Getränkeauslaufs vorhanden sein. Ein Abstand zwischen dem Getränkeauslauf und einer Endfläche der Andockstelle, an welcher die entsprechende Endfläche des angedockten Andockelements ansteht, kann bspw. ebenfalls maximal 2.5 cm, maximal 2 cm oder maximal 1.5 cm betragen.

Oft besitzt eine Getränkezubereitungsmaschine eine Front mit einer von einer Front vorstehenden Abstellplattform für ein Trinkgefäss und darüber, ebenfalls von der Front vorstehend, einer Getränkeauslaufhaube, an deren Unterseite der Getränkeauslauf angeordnet ist. In Ausführungsformen ist nun die Andockstelle seitlich an der Getränkeauslaufhaube vorhanden. Das bedeutet beispielsweise, dass das Milchschäumergerät von der Seite her an die Getränkeauslaufhaube gekoppelt wird.

Mindestens das Andockelement und beispielsweise das ganze Milchschäumergerät ist dann im angekoppelten Zustand vor der Front der Getränkezubereitungsmaschine angeordnet.

Ein Getränkezubereitungssystem weist ein Milchschäumergerät sowie eine Getränkezubereitungsmaschine auf. Die beiden Geräte sind in ihrer Dimensionierung so aufeinander abgestimmt, dass das Milchschäumergerät entweder auf derselben Ebene abgestellt ist wie die Maschine, oder auf einer von der Maschine gebildeten Milchschäumerplattform.

Ausserdem können Milchschäumergerät sowie eine Getränkezubereitungsmaschine im Design aufeinander abgestimmt sein.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Ansicht des Geräts zum Zubereiten von geschäumter Milch (Milchsehäumergeräts);
- Fig. 2: eine Explosionsdarstellung des Milchschäumergeräts;
- Fig. 3: eine Explosionsdarstellung der Milchschäumeinheit des Milchschäumergeräts;
- Fig. 4: eine Ansicht der entlang einer horizontalen Ebene angeschnittenen Milchschäumeinheit;
- Fig. 5: eine teilweise Ansicht der Dichtung der Milchschäumeinheit mit Elementen der Zahnradpumpe;
- Fig. 6: eine Ansicht des entlang einer horizontalen Ebene angeschnittenen oberen Grundgehäuseteils der Milchschäumeinheit;
- Fig. 7: eine Ansicht des oberen Grundgehäuseteils von unten;
- Fig. 8: eine Ansicht des entlang einer vertikalen Ebene angeschnittenen oberen Grundgehäuseteils;
- Fig. 9: eine Ansicht der Ventileinheit der Milchschäumeinheit;
- Fig. 10: eine Explosionsdarstellung der Ventileinheit;
- Fig. 11a-11c: die Ventileinheit in Grundriss, Seitenriss und Aufriss;
- Fig. 12: eine Ansicht der Milchschäumeinheit mit Ventileinheit von oben;
- Fig. 13: eine Darstellung der Milchschäumeinheit, entlang einer Ebene durch die Ventileinheit geschnitten;
- Fig. 14a-14b: Ansichten des Andockelements von schräg oben bzw. schräg unten;
- Fig. 15a-15d: Ansichten des Ergänzungsteils;
- Fig. 16a-16b: Ansichten des Grundkörpers;
- Fig. 17a-17d: Darstellungen des Andockelements ohne äusseres Gehäuse;
- Fig. 18a-18c: Darstellungen von Teilen des Geräts, aus denen die Funktion des Andockelements ersichtlich ist;
- Fig. 19: eine Ansicht eines Getränkezubereitungssystems mit dem Milchschäumergerät;
- Fig. 20: ein Detail des Getränkezubereitungssystems, entlang einer vertikalen Ebene angeschnitten dargestellt;
- Fig. 21: ein Detail zum Andocken des Milchschäumergeräts an die Getränkezubereitungsmaschine;
- Fig. 22: eine Ansicht eines Details des Milchschäumergeräts; und
- Fig. 23: ein Schema des Getränkezubereitungssystems.

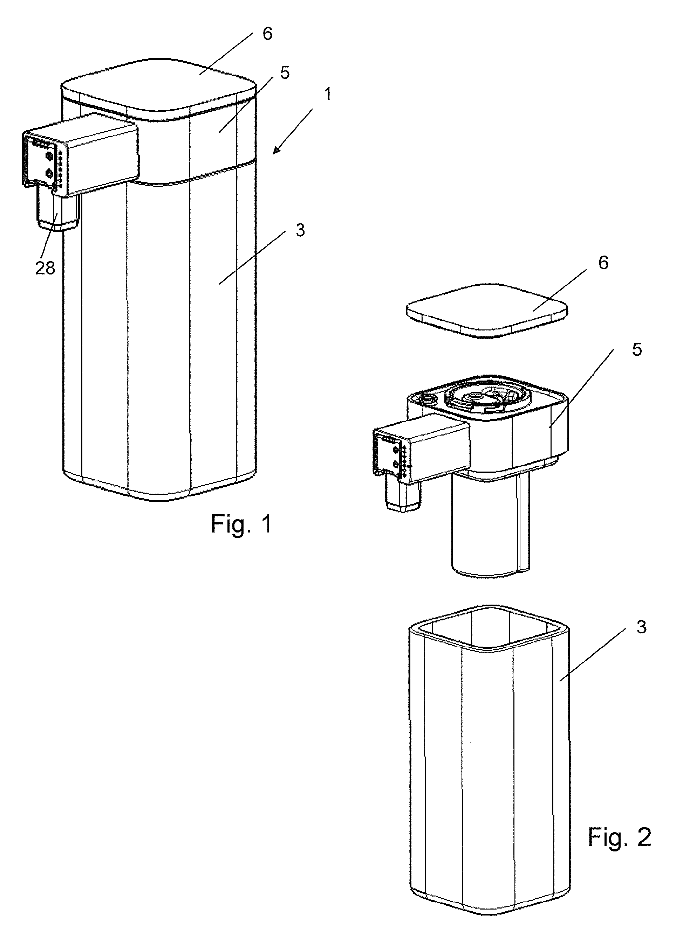

Das Gerät 1 zum Zubereiten von geschäumter Milch (Milchschäumergerät) ist als Ganzes in Figur 1 dargestellt. Figur 2 zeigt eine Explosionsdarstellung seiner Teile. Das Gerät 1 weist einen Milchbehälter 3, eine Milchschäumeinheit 5 und einen Deckel 6 auf.

Der Milchbehälter 3 ist in der dargestellten Ausführungsfom zu Wärmeisolationszwecken doppelwandig ausgestaltet; auch einwandige Ausgestaltungen sind möglich. Er kann durchsichtig sein oder ein Sichtfenster zum Überprüfen des Milchstandes aufweisen.

Der Milchbehälter 3 und Deckel 6 können so aufeinander abgestimmt sein, dass der Deckel 6 auch direkt auf den Milchbehälter 3 aufsetzbar ist, ohne dazwischen angeordnete Milchschäumeinheit 5, wodurch der gefüllte Milchbehälter mit Deckel bspw. in den Kühlschrank gestellt werden kann; auch können Milchbehälter und Deckel auf einfache Weise gereinigt werden und bspw. spülmaschinenfest ausgebildet sein.

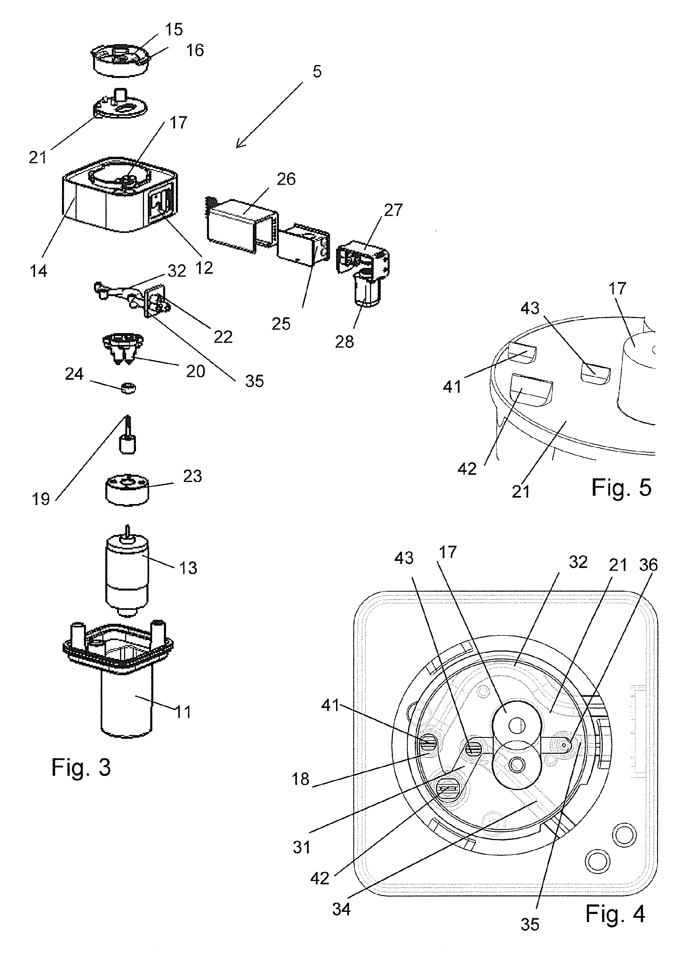

Die Elemente der Milchschäumeinheit 5 sind in der Figur 3 in einer Explosionsdarstellung dargestellt. Ein unteres Grundgehäuseteil 11 trägt einen zur Zahnradpumpe gehörenden Elektromotor 13 sowie ein oberes Grundgehäuseteil 14. Im Grundgehäuse ist ein seitliches Fenster 12 ausgebildet.

Das obere Grundgehäuseteil 14 bildet eine ungefähr kreiszylindrische Wanne in welcher Zahnräder 17 einer Zahnradpumpe angeordnet sind. Die Zahnräder 17 der Zahnradpumpe werden über eine Welle 19 angetrieben, die mit dem Elektromotor 13 verbunden ist. Eine Dichtung 21 dichtet die Wanne nach unten ab.

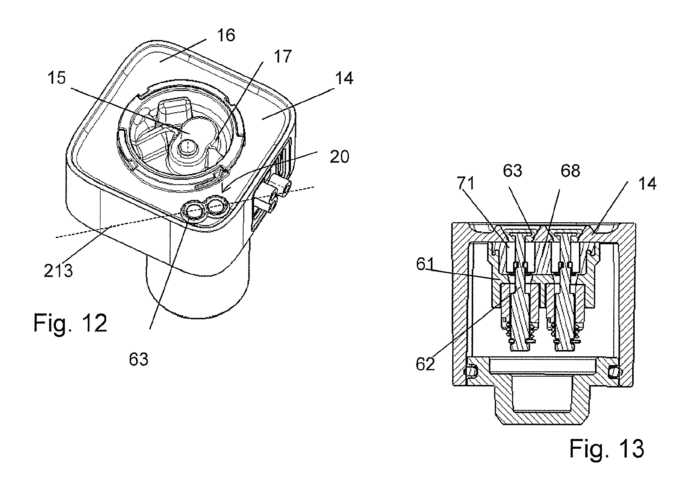

Die Zahnradpumpe kann zusätzlich zu den Zahnrädern, der Welle und dem Elektromotor auch ein eigenes Gehäuse aufweisen, oder ein solches kann in das Grundgehäuse oder andere Teile, beispielsweise einen Milchschäumeinheit-Deckel 16, integriert sein. Im dargestellten Ausführungsbeispiel ist der Milchschäumeinheit-Deckel 16 so ausgeformt, dass sich zwischen der Dichtung 21 und dem Milchschäumeinheit-Deckel 16 aufgrund einer Wölbung 15 (auch in Fig. 12 gut sichtbar) eine die Zahnräder 17 umfassende Pumpenkammer bildet.

Am Grundgehäuse 11, 14 ist auch eine Ventileinheit 20 befestigt.

Von der Ebene der Zahnradpumpe nach unten erstreckt sich ein Milchansaugrohr 18 (in Figur 3 nicht dargestellt), das im zusammengesetzten Zustand des Geräts 1 in den Milchbehälter 3 hinein und bis fast an dessen Boden ragt.

Unterseitig der Zahnradpumpe ist weiter ein Anschlussformteil 22 vorhanden. Dieses schliesst das Fenster 12 ab und bildet gleichzeitig eine Durchführung zur Verbindung der nachstehendend beschriebenen, am Grundgehäuse befestigten Leitungen des Milchschäumers einerseits und einem Andockelement andererseits.

Ebenfalls in Fig. 3 sichtbar sind ein Abstandhalter 23 und ein Motordichtungselement 24.

Das Andockelement weist einen Andockelementkörper auf, der durch ein Andockelementgehäuse 26 geschützt ist. Der Andockelementkörper wird durch einen Grundkörper 25 und ein Ergänzungsteil 27 gebildet, was nachstehend noch eingehender beschrieben wird. In Fig. 3 bereits sichtbar ist, dass das Ergänzungsteil 27 anderem einen nach unten ragenden Milchschaumauslauf 28 aufweist.

Figur 4 zeigt eine Ansicht von oben der entlang einer über der von der Dichtung 21 definierten Dichtungsebene liegenden Ebene geschnittenen Milchschäumeinheit 5. Die helleren Linien stellen in der Ansicht an sich nicht sichtbare, weiter unten verlaufende Elemente dar.

Die Zahnradpumpe ist oberhalb der Dichtungsebene angebracht. Zur Zahnradpumpe hin führt eine oberseitige Flüssigkeitsleitung 31. Diese ist über von der Dichtung 21 gebildete Lippenventile 42, 41, die auch in Figur 5 gut sichtbar sind, mit dem Milchansaugrohr 18 einerseits und einer Heisswasser- und/oder Dampfeinspeisungsleitung 32 andererseits verbunden. Ebenfalls über ein von der Dichtung gebildetes Lippenventil 43 ist eine Luftzuführleitung 34 mit der oberseitigen Flüssigkeitsleitung bzw. eingangsseitig mit der Zahnradpumpe verbunden.

Hinter der Zahnradpumpe ist eine Durchführung 36 für die geförderte und je nach gewähltem Betriebszustand bereits geschäumte Milch angeordnet, durch welche diese durch die Dichtungsebene wieder nach unten gelangt, wo sie durch eine Wegführleitung 35 ins Andockelement gelangt.

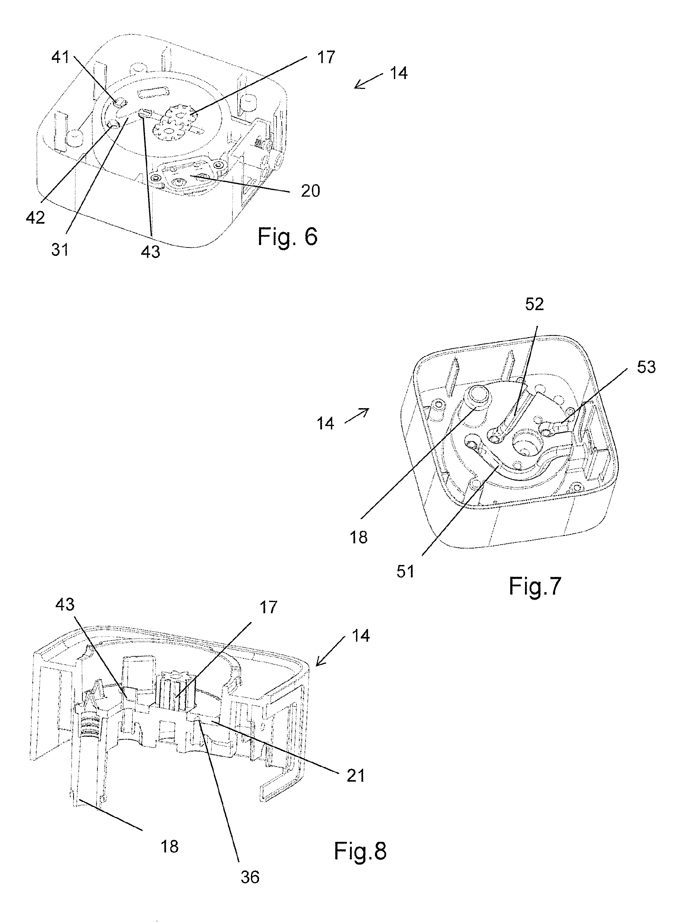

**Figuren 6 bis 8** zeigen weitere Ansichten des oberen Grundgehäuseteils 14, das in Fig. 6 entlang einer horizontalen und in Fig. 8 entlang einer vertikalen Ebene angeschnitten und in Fig. 7 in einer Unteransicht dargestellt ist.

Die unterseitigen Leitungen werden durch Schläuche des Anschlussformteils 22 gebildet, die in entsprechende Kanäle des oberen Grundgehäuseteils 14 eingelegt sind. In der Unteransicht gemäss Fig. 7 sind diese, d.h. der Kanal 51 für die Heisswasser- und/oder Dampfeinspeisungsleitung 32, der Kanal 52 für die Luftzuführleitung 34 und der Kanal 53 für die Wegführleitung 35, besonders gut sichtbar.

Die Dichtung 21 (Fig. 8) ist zwischen das obere Grundgehäuseteil 14 und den Milchschäumeinheit-Deckel (in Fig. 8 nicht gezeichnet) geklemmt. Zwischen dem Milchschäumeinheit-Deckel und dem oberen Grundgehäuseteil ist aufgrund der Wölbung 15 im Milchschäumeinheit-Deckel (Fig. 3; Fig. 12) die Pumpenkammer der Zahnradpumpe ausgebildet, welche die Zahnräder 17 umfasst.

In Figur 8 sieht man ein weiteres optionales Merkmal. Die Durchführung 36 für die geförderte und je nach gewähltem Betriebszustand bereits geschäumte Milch ist in der Art einer Drossel verengt. Dadurch wird automatisch ein gewisser Staudruck in der Zahnradpumpe erzeugt aufgrund dessen sich die Durchflussmenge regelt. Dieser Staudruck trägt zur effizienten Schäumung der kalten Milch bei.

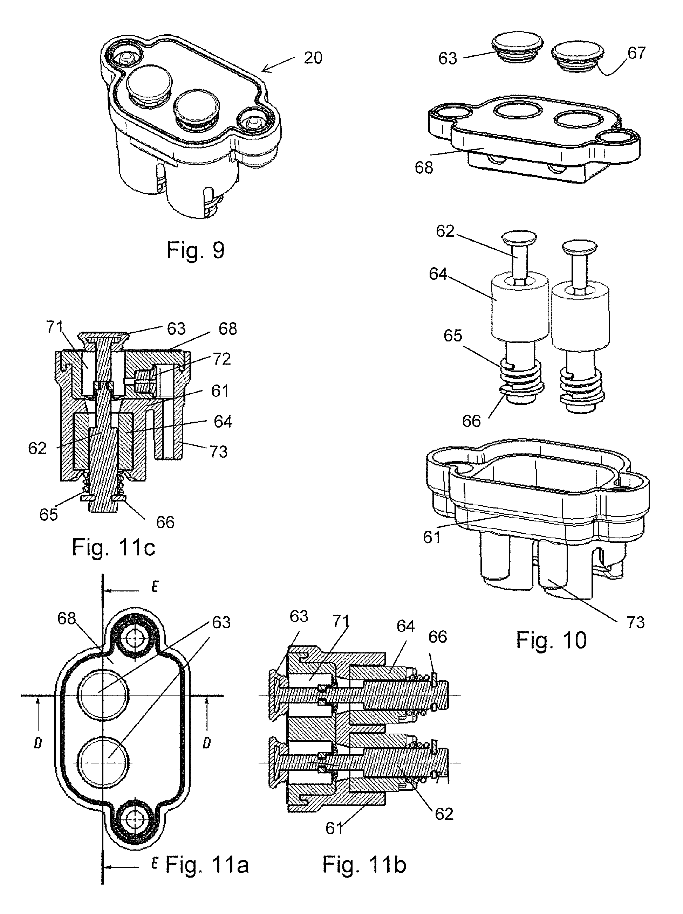

Figur 9 zeigt eine Ansicht der Ventileinheit 20, Figur 10 zeigt eine Explosionsdarstellung der Ventileinheit und Figuren **11a-11e** zeigen die Ventileinheit in einer Ansicht von oben, entlang der Linie E-E in Fig. 11a geschnitten und entlang der Linie D-D in Fig. 11a geschnitten,

Figur 12 zeigt eine Ansicht der Milchschäumeinheit mit Ventileinheit 20, ohne Andockelement und Milchansaugrohr, von oben, und Figur 13 zeigt diese entlang einer durch die Linie 213 in Fig. 12 gehenden vertikalen Ebene geschnitten.

Die Ventileinheit 20 weist in einem gemeinsamen Ventilgehäuse 61 zwei Ventilelemente auf. Jedes Ventilelement weist ein Verschlusselement 62 auf, welches ein Dichtungselement 63 trägt und entlang einer - in der gewählten Einbausituation vertikalen - Achse bewegbar ist. Die Bewegung erfolgt nach oben durch Elektromagneten 64 und entgegen der Kraft einer Feder 65, die zwischen dem Elektromagneten (oder dem Ventilgehäuse) und einem Sicherungsring 66 eingespannt ist. Die von den Verschlusselementen und Dichtungselementen oberseitig gebildeten Köpfe der Ventilelemente ragen durch Öffnungen im oberen Grundgehäuseteil 14 (siehe Figuren 12 und 13). Im geschlossenen Zustand wird eine Dichtungspartie 67 des jeweiligen Dichtungselements 63 entlang des Umfangs der jeweiligen Öffnung durch die Kraft der Feder gegen eine Fläche des oberen Grundgehäuseteils 14 gepresst.

Zwischen der betreffenden Wand des oberen Grundgehäuseteils 14 und einer Dichtung 68 bildet sich bei beiden Ventilen je eine Ventilkammer 71 aus. Wenn das Verschlusselement mit dem Dichtungselement 63 durch den Elektromagneten angehoben ist, bildet sich eine Einströmöffnung, durch welche Luft von aussen in die betreffende Ventilkammer 71 einströmen und von dieser durch einen Luftanschlussstutzen 73 in eine (gemeinsame) Luftzuführleitung gelangen kann.

Die beiden Ventilelemente sind unabhängig voneinander ansteuerbar und können je einzeln oder zusammen geöffnet werden. Dadurch können verschiedene Ventilöffnungszustände erwirkt werden. Insgesamt ergeben sich vier Ventilöffnungszustände, indem entweder nur eines der Ventilelemente geöffnet und das andere geschlossen ist, beide geöffnet oder beide geschlossen sind.

Es kann sinnvoll sein, wenn in Ausführungsformen die Ventilelemente und/oder die Grösse der jeweils gebildeten Einströmöffnung unterschiedlich gross gewählt werden und/oder die von einem der Ventilelemente eingelassene Luft einen deutlich grösseren Strömungswiderstand erfährt als die vom anderen Ventilelement eingelassene Luft. Dann sind die vier verschiedenen definierten Öffnungszustände quantitativ verschieden. Beispielsweise kann die Einströmöffnung eines der Ventilelemente doppelt so gross sein wie die Einströmöffnung des anderen Ventilelements so dass sich die Zustände "0" (Luftventil ganz geschlossen), "1/3" (das kleinere Ventilelement geöffnet), "2/3" (das grössere Ventilelement geöffnet) und "1" (beide Ventilelemente geöffnet) anwählen lassen.

Der Ventileinheit in Luftströmungsrichtung nachgeschaltet kann ein Luftflussregelelement, wie bspw. ein 3/2-Wege-Ventil (nicht gezeichnet) angeordnet sein, durch welches wahlweise der Weg zwischen den Ventilkammern 71 und der Mischdüse oder der Weg zwischen den Ventilkammern und dem Eingang der Zahnradpumpe geöffnet und der jeweils andere Weg geschlossen werden kann, um zu regeln, ob die Mischdüse oder die Zahnradpumpe mit Luft versorgt wird. Ein solches Luftflussregelelement kann jedoch auch entfallen, wobei dann die Regelung durch die entsprechenden Ventilelemente selbsttätig erfolgt, indem sich diese nur durch Unterdruck auf der Ausgangsseite öffnen und auf diese Weise einen Rückfluss von geschäumter Milch in den jeweils nicht benötigten Weg verhindern.

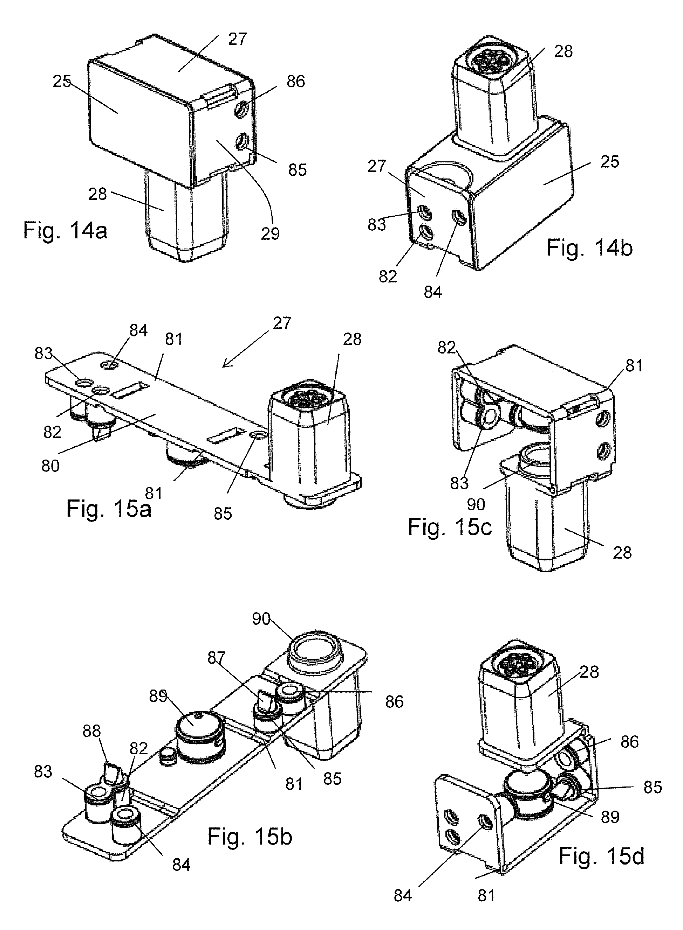

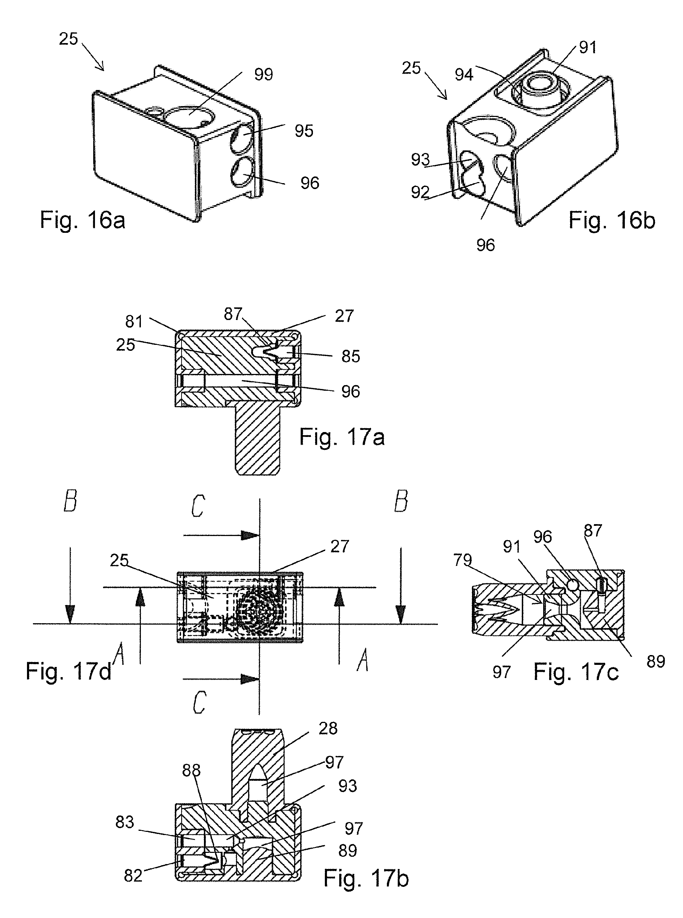

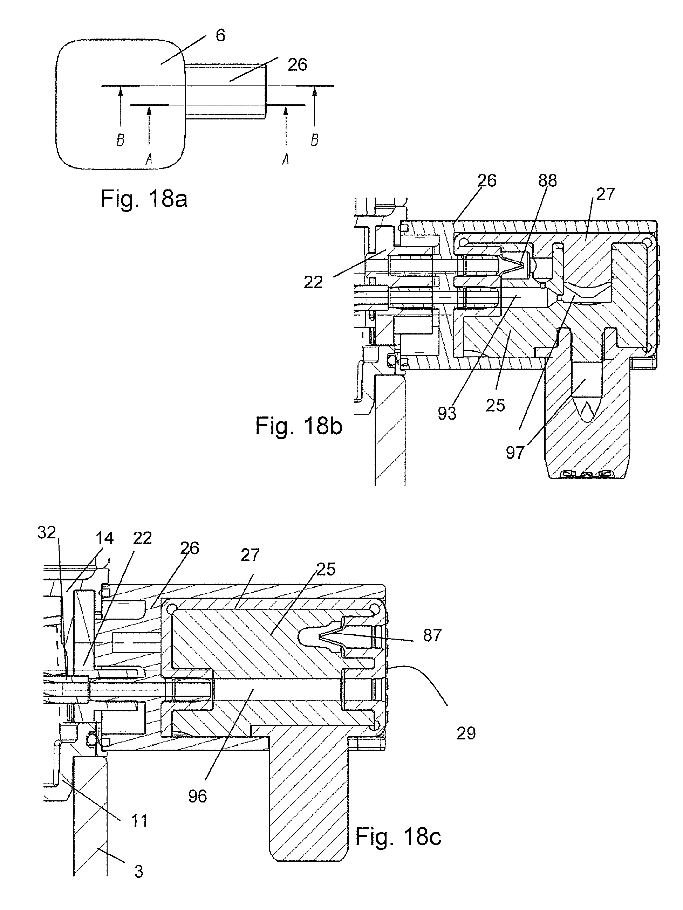

Anhand von Figuren 14a-18c werden nachstehend Aufbau und Wirkungsweise des Andockelements beschrieben. **Figuren 14a und 14b** zeigen Ansichten des Andockelements von schräg oben bzw. schräg unten. **Figuren 15a und 15b** zeigen das Ergänzungsteil 27 in abgewickelter und **Figuren 15c und 15d** in gefalteter Form. **Figuren 16a und 16b** zeigen den Grundkörper 25. **Figuren 17a, 17b und 17c** zeigen das Andockelement entlang der Ebenen A-A, B-B und C-C in **Figur 17d** geschnitten **Figur 18a** zeigt eine Ansicht des Geräts von oben, und **Figuren 18b und 18c** zeigen Ausschnitte aus Schnittdarstellungen des entlang der Ebenen A-A bzw. B-B in Figur 18a geschnittenen Geräts.

Das beispielsweise in Figuren 14a und 15c vorne liegend dargestellte stirnseitige Ende wird im Betrieb an die Kaffeemaschine angekoppelt, während das gegenüberliegende Ende an die Milchschäumeinheit 5 koppelbar ist.

Der Grundkörper 25 kann als Ganzes als Formkörper aus einem geeigneten wärmebeständigen Kunststoff ausgebildet und beispielsweise als Spritzgussteil gefertigt sein. Das Ergänzungsteil 27 ist beispielsweise aus einem Silikon gefertigt. Es ist einstückig und insgesamt flächig mit daran angeformten funktionellen Elementen. Die Gesamtheit der flächigen Abschnitte 80 wird hier als 'Basis' bezeichnet, zwischen den flächigen Abschnitten 80 sind Gelenke 81 geformt, welche durch durchgehende Öffnungen sowie rillenartige Schwächungen gebildet werden und ein zwangsloses Falten um den Grundkörper 25 ermöglichen. Die Dimensionen der flächigen Abschnitte 80 zwischen den Rillen sind auf die Dimensionen des Grundkörpers abgestimmt.

Die funktionellen Elemente des Ergänzungsteils 27 werden nebst dem Milchschaumauslauf 28 durch Durchführungen 82-86, und ein Michdüsenelement 89 gebildet.

Der Grundkörper 25 bildet eine vom kaffeemaschinenseitigen Ende zum gegenüberliegenden Ende durchgehende Durchführungsleitung 96 für (kaltes oder von der Kaffeemaschine erhitztes) Reinigungswasser oder Reinigungsdampf, welches bzw. welcher bei Bedarf von der Durchführungsleitung 96 in die Heisswasser- und/oder Dampfeinspeisungsleitung 32 und von dieser in die zu reinigenden Elemente, insbesondere die Zahnradpumpe, gelangt. Der Durchführungsleitung 96 sind kaffeemaschinenseitig und milchschäumerseitig je eine Durchführung 86; 84 des Ergänzungsteils zugeordnet.

Weiter ist ein Dampfanschluss ausgebildet, durch welchen Dampf von der Kaffeemaschine in Mischdüse gelangt. Der Dampfanschluss wird durch eine Durchführung 85 mit zugeordnetem Ventil 87 des Ergänzungsteils 27 gebildet, welche in eine Dampfanschlussöffnung 95 des Grundkörpers 25 hinein ragen.

Milchschäumerseitig sind im Grundkörper je eine Öffnung 92, 93 für die Luft- und die Milchzufuhr ausgebildet, in welche entsprechende Durchführungen 82, 83 des Ergänzungsteils hineinragen. Die Luftdurchführung 82 ist mit einem zugeordneten Ventil 88 versehen; dieses ist wie das Dampfventil 87 als Lippenventil (,Duckbill valve') ausgebildet und einstückig mit dem Rest des Ergänzungsteils 27.

Für die Mischdüse weist der Grundkörper 25 eine Mischdüsenöffnung 99 auf, in welche das Mischdüsenelement 89 hineinragt. Ausserdem sind auf der Unterseite ein Milchschaumauslauffortsatz 91 und ein diesen umgebender Positionierring 94 ausgebildet, die mit einer entsprechenden Struktur 90 des Ergänzungsteils zusammenwirken.

Die Mischdüse wird zwischen dem Mischdüsenelement und entsprechend geformten Kammern des Grundkörpers 25 ausgebildet.

Dampf, der über den Dampfanschluss eingespeist wird gelangt via das Ventil 87 in eine Mischdüsenkammer 97, was man bspw. in Fig. 17c besonders gut sieht. Durch den Dampffluss wird in der Mischdüsenkammer 97 ein Unterdruck erzeugt, durch welchen via die entsprechenden Durchführungen 82, 83 Luft und Milch angesaugt wird (Fig. 17b, Fig. 18b). In der Mischdüsenkammer entsteht Milchschaum, der durch den Milschschaumauslauf 28 nach unten gelangt und in ein bereitstehendes Trinkgefäss fliesst. Die geschäumte Milch ist aufgrund der vom Dampf abgegebenen Kondensationswärme warm.

Aufgrund der kleinen Düsenöffnung, durch welche der Dampf mit hoher Geschwindigkeit austritt, ist die Mischdüse also so ausgestaltet, dass durch die Düsenwirkung ein Unterdruck erzeugt wird. Dieser unterstützt die Förderung der Milch aus der Milchleitung auch dann, wenn die Milch aufgrund der Zahnradpumpe aktiv gefördert wird.

Wenn in der inneren Mischdüsenkammer 97 Normaldruck oder ein leichter Überdruck herrscht, sind die Lippenventile 87, 88 geschlossen. Wenn hingegen-sobald Wasserdampf einströmt, aufgrund des Bernoulli-Effekts und/oder aufgrund von Impulsübertragung - ein Unterdruck herrscht, öffnen sie sich selbsttätig.

Die Zufuhr von Luft in die Mischdüsenkammer kann anstatt durch die Ventileinheit auch direkt von aussen, bspw. über ein Lippenventil, in die Mischdüsenkammer erfolgen, wobei sich dann zwei voneinander unabhängige Luftwege für die Mischdüsenkammer einerseits und die Zahnradpumpe andererseits ergeben.

Eine solche Konstruktion mit Luftzufuhr direkt in die Mischdüsenkammer kann beispielsweise auch für Ausführungsformen gewählt werden, bei denen abweichend vom hier beschriebenen Beispiel kein elektrisch betriebenes Antriebsmittel (keine elektrisch angetriebene Pumpe) vorhanden ist und bei welchen nur dampfunterstützt, unter Nutzung der Saugwirkung der Mischdüse, geschäumt wird.

Das Andockelement ist so ausgebildet, dass der Milchschaumauslauf 28 nahe beim Auslauf für das Heissgetränk liegen kann. Zu diesem Zweck ist er in unmittelbarer Nähe zur Endfläche 29 angeordnet, welche an eine entsprechende Fläche der Getränkezubereitungsmaschine gekoppelt wird. Der Abstand beträgt wie vorstehend diskutiert nicht mehr als 2.5 cm und vorzugsweise noch weniger. Der Abstand wird wie üblich als der senkrecht auf die von der Endfläche definierte (vertikale) Ebene gemessene Abstand zwischen dieser Ebene und dem Mittelpunkt der Austrittsöffnung aus dem Milchschaumauslauf gemessen.

In Fig. 17c besonders gut sichtbar ist ein weiteres optionales Merkmal. Im Milchschaumauslauf 28 verjüngt sich die Auslaufkammer 86, durch welche die - im Allgemeinen geschäumte - Milch nach unten läuft. Das hat einerseits eine zusätzlich schaumbildende und Schaum homogenisierende Wirkung und kanalisiert andererseits den Milch- bzw. Milchschaumfluss.

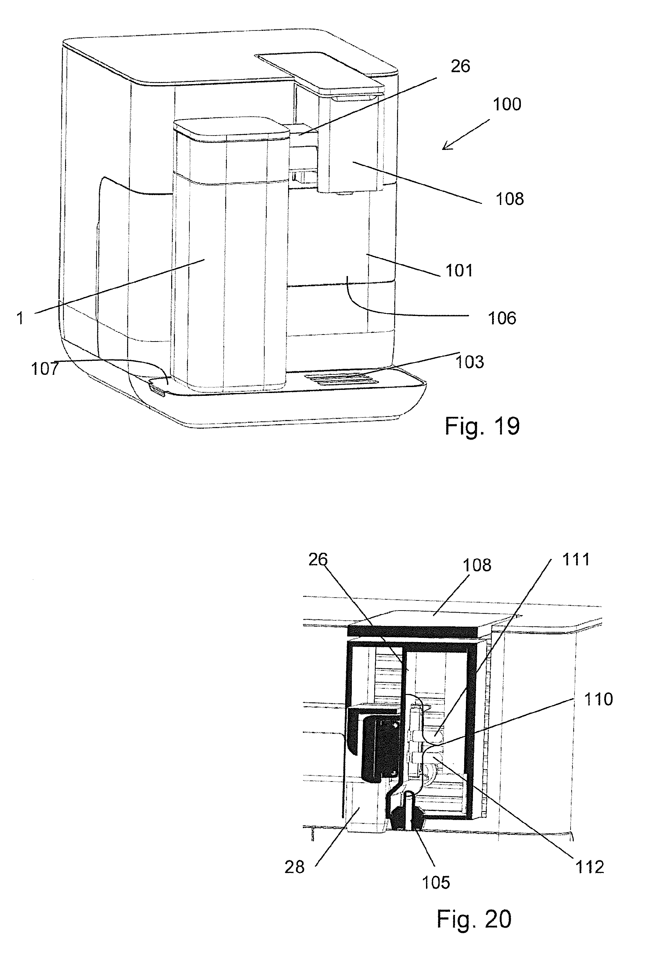

Figur 19 zeigt eine Ansicht des ganzen Getränkezubereitungssystems 100 mit dem Milchschäumergerät 1 und einer Kaffeemaschine 101, an welche das Milchschäumergerät 1 angekoppelt ist. Figur 20 zeigt ein Detail dazu mit angeschnitten dargestellter Auslaufhaube.

Die Kaffeemaschine weist wie an sich für Kaffeemaschinen bekannt einen Wasserbehälter, eine Wasserpumpe und einen Wassererhitzer auf. Weiter ist eine Brühkammer zum Zubereiten von Kaffee aus erhitztem Wasser durch Extraktion aus Kaffeepulver vorhanden, welches Kaffeepulver beispielsweise in Portionskapseln zur Verfügung gestellt wird, die vor der Zubereitung in die Kaffeemaschine eingeworfen werden. Alternativ zu einem Portionskapselsystem kann die Kaffeemaschine auch als sogenannter Kaffeevollautomat ausgebildet sein, welcher auch eine Kaffeemühle aufweist und das Kaffeepulver portionsweise mahlt und der Brühkammer zuführt. Als noch weitere Alternative - insbesondere wenn die Kaffeemaschine als Kolbenmaschine ausgebildet ist, d.h. die Brühkammer zwischen einem festen Teil und einem entfernbaren Kolben ausgebildet ist, kann auch vorgesehen sein, dass das Kaffeepulver vom Benutzer im bereits gemahlenen Zustand, aber lose in die Brühkammer eingebracht wird.

Weiter kann die Kaffeemaschine einen Auffangbehälter für verbrauchte Kaffeepulverportionen (in Kapseln oder lose, je nach Ausgestaltung der Kaffeemaschine) aufweisen.

An der Kaffeemaschine ist eine Abstellplattform 103 zum Abstellen eines Trinkgefässes ausgebildet. Diese kann beispielsweise durch einen Gitterrost gebildet sein, unter welchem sich eine Auffangschale befindet. In Ausführungsformen kann die Abstellplattform auf geeignete Art höhenverstellbar sein.

Über der Abstellplattform 103 befindet sich ein Kaffeeauslauf 105, durch welchen der gebrühte Kaffee ausläuft und in das darunter liegende Gefäss gelangt. Dieser befindet sich unter einer Auslaufhaube 108, welche einen Teil des Kaffeemaschinengehäuses bildet und den Auslauf nach vorne und zu den Seiten hin mindestens teilweise abdeckt.

Die Kaffeemaschine 101 bildet eine Front 106 von welcher wie an sich von anderen Kaffeemaschinen bekannt einerseits die Abstellplattform 103 und andererseits darüber die Auslaufhaube 108 vorsteht.

Ebenfalls vor der Front steht hier eine Milchschäumerplattform 107 vor, auf welche des angedockte Milchschäumergerät 1 abgestellt ist.

In der Nähe des Kaffeeauslaufs 105 und hier unter der Auslaufhaube befindet sich eine Anschlussstelle 110 zum Anschliessen des Andockelements an die Kaffeemaschine. Diese Anschlussstelle weist eine Dampfabgabestelle 111 zum Koppeln an den Dampfanschluss des Andockelements, eine Heisswasser- und/oder Dampfabgabestelle 112 zum Koppeln an die Durchführungsleitung 83 auf. Die Dampfabgabestelle 111 und die Heisswasser- und/oder Dampfabgabestelle 112 werden bei Bedarf vom Wassererhitzer her mit Dampf bzw. Heisswasser versorgt, wobei ein Mehrwegeventil im Innern der Kaffeemaschine erhitzte Flüssigkeit bzw. Dampf wahlweise dem Brühmodul, der Dampfabgabestelle oder der Heisswasserund/oder Dampfabgabestelle 112 zuführen kann.

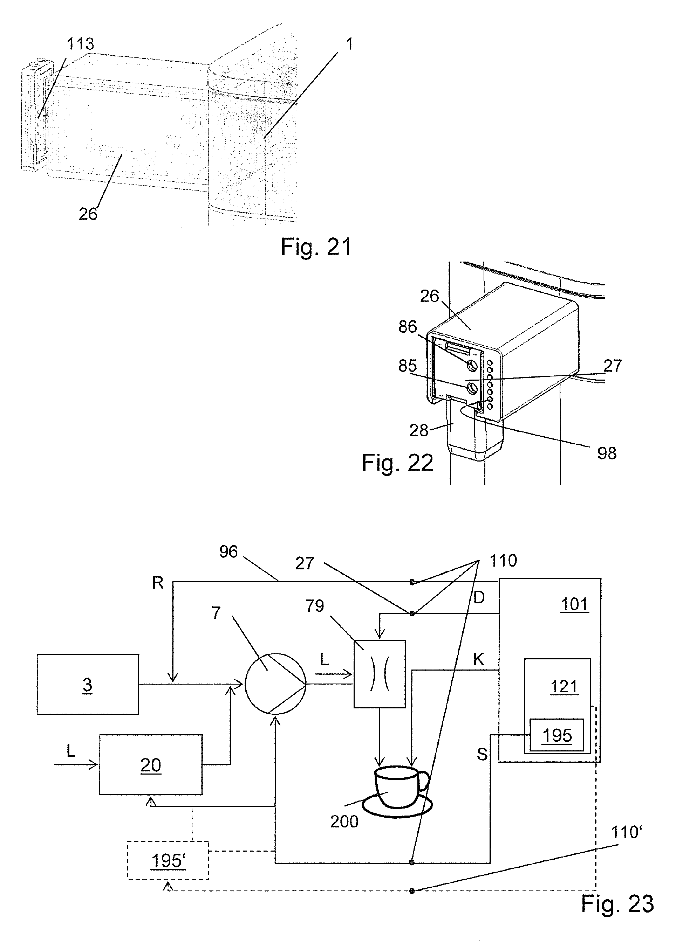

Weiter weist die Anschlussstelle elektrische Kontakte 113 auf, die in **Figur 21** schematisch dargestellt sind. Diese elektrischen Kontakte 113 bilden eine getränkezubereitungsmaschinenseitige Schnittstelle und stellen bei angekoppeltem Andockelement eine elektrische Verbindung zu entsprechenden elektrischen Anschlusselementkontakten her, welche mit durch das Andockelement führenden elektrischen Leitern verbunden sind oder durch diese gebildet werden. Diese elektrischen Leiter versorgen die elektrisch angetriebenen Elemente des Milchschäumergeräts, namentlich die Zahnradpumpe, mit Strom und gegebenenfalls Steuersignalen.

Dabei ist sowohl möglich, eine Steuerung dieser elektrisch angetriebenen Elemente im Milchschäumergerät vorzusehen (dieses ist dann mit den nötigen elektronischen Einheiten versehen und empfängt Steuerungssignale von der Kaffeemaschine oder von einer Eingabeeinheit des Milchschäumergeräts her), als auch eine Steuerung dieser Elemente in der Kaffeemaschine selbst unterzubringen. Im letzteren Fall werden durch die elektrischen Leitungen im Wesentlichen lediglich Ströme geleitet, welche die elektrisch angetriebenen Elemente entsprechend den Vorgaben der Steuerung antreiben.

Das Andocken des Milchschäumergeräts 1 erfolgt von der Seite her an die Auslaufhaube 108, und zwar so, dass das Milchschäumergerät als Ganzes vor der Kaffeemaschine und seitlich der Auslaufhaube 108 angeordnet ist. Das Andocken erfolgt beispielswiese durch eine einfache lineare seitliche Bewegung des zusammengesetzten Milchschäumergeräts der Front 106 entlang.

Wie man in **Figur 21** (das Milchschäumergerät 1 abgekoppelt zeigend) und insbesondere in **Figur 22** (Milchschäumergerät ohne Kaffeemaschine) sieht, sind die elektrischen Leiter und die entsprechenden andockelementseitigen Kontakte 98 am Andockelementgehäuse 26 ausgebildet. Die Leiter können durch isolierte Drähte oder Litzenleiter oder durch Leiterbahnen einer gedruckten Schaltung (Leiterplatte oder Flexprint) oder ähnlich gebildet werden.

Die Steuerung der Zahnradpumpe ist insbesondere so eingerichtet, dass die Drehzahl der Zahnräder 17 verstellbar, d.h. anwählbar ist. Dadurch kann der Benutzer die Fördergeschwindigkeit und - gemäss dem nachstehend noch eingehender beschriebenen Vorgehen - gegebenenfalls die Zubereitung von kalter geschäumter Milch steuern.

**Figur 23** zeigt ein Übersichtsschema des Milchschäumergeräts und von dessen Ankopplung an die Getränkezubereitungsmaschine (Kaffeemaschine 101). In der Figur bezeichnet "L" Luftzuführungen. Der Buchstabe D bezeichnet eine Leitung für Dampf, K eine Leitung für das Heissgetränk, R eine Leitung für Reinigungswasser-oder Dampf (optional), und S bezeichnet die Stromversorgung.

Die Ansteuerung 195 ist hier als Teil einer Elektronikeinheit 121 der Kaffeemaschine 101 dargestellt. Die Elektronikeinheit 121 ist bspw. eingerichtet, durch eine Messung eine Kapsel zu erkennen und/oder eine Benutzereingabe entgegenzunehmen, bspw. über ein geeignetes Bedienelement mit einer entsprechenden Taste, einem Touch Screen und/oder dergleichen.

Die Ansteuerung 195 ist hier so ausgebildet, dass sie sowohl die Zahnradpumpe 7 als auch die Ventileinheit 20 ansteuern kann, wobei ein Betriebsparameter des Zahnrads und/oder der Ventileinheit regelbar ist. Über die Anschlussstelle 110 laufen direkt Ansteuersignale für die Ventileinheit 20 und/oder die Zahnradpumpe 7.

Alternativ zum Anbringen der Ansteuerung ganz oder teilweise in der Kaffeemaschine kann eine Ansteuerung 195' auch ganz oder teilweise als Teil des Milchschäumergeräts vorhanden sein. Diese Alternative ist in der Figur 20 gestrichelt dargestellt. Über die alternative Schnittstelle 110' werden dann elektrische Energie und ggf. Datensignale von der Elektronikeinheit an die Ansteuerung 195' übertragen.

Mit dem Bezugszeichen 79 wird die Mischdüse als Ganze bezeichnet.

Das Milchschäumergerät kann wie folgt betrieben werden:
Für die Zubereitung von kalter geschäumter Milch wird die Zahnradpumpe in Gang gesetzt, während mindestens eines der Ventilelemente der Ventileinheit 20 geöffnet ist. Durch die Wirkung der Zahnradpumpe wird an deren Eingangsseite ein Unterdruck erzeugt, welcher sowohl Milch - durch das Milchansaugrohr 18 und das entsprechende Lippenventil 42 - als auch, durch die Ventileinheit 20 und das entsprechende Lippenventil 43, Luft ansaugt. In der Zahnradpumpe entsteht so Milchschaum, der durch die Durchführung 36 - deren Enge die Bildung von feinporigem Schaum begünstigt -, die Wegführleitung und das Andockelement 25 zum Milchschaumauslauf 28 gelangt und dort abgegeben wird, wobei im Allgemeinen ein Trinkgefäss 200 auf die Plattform 103 abgestellt wird.

Auch für die Zubereitung von warmer geschäumter Milch erfolgt das Ansaugen der - im Allgemeinen kalten - Milch aus dem Milchbehälter 3 über die Zahnradpumpe. Diese fördert die Milch in die Mischdüse. Dieser wird gleichzeitig von der Kaffeemaschine her über den Dampfanschluss Wasserdampf zugeführt. Der Wasserdampf erzeugt wie vorstehend dargestellt einen Unterdruck, welcher einerseits einen zusätzlichen Sog auf die Milch ausübt und die Förderung durch die Zahnradpumpe unterstützt und andererseits durch das ebenfalls mindestens teilweise geöffnete Ventilelement 20 Luft ansaugt. In der Mischdüsenkammer 97 wird die Milch mit dem Wasserdampf vermischt, was sie erwärmt, und es wird gleichzeitig Luft untergemischt, so dass sich Luftbläschen bilden und Milchschaum entsteht. Die warme, geschäumte Milch wird durch den Milchschaumauslauf abgegeben.

Je nach dem kann wie erwähnt ein 3/2-Wegeventil oder ein anderes Mittel wahlweise das Ventilelement 20 mit der Zahnradpumpe 7 oder der Mischdüsenkammer 97 verbinden für das Erzeugen des kalten bzw. warmen Milchschaums. Wie erwähnt ist auch möglich, dass die Luftzufuhr in die Mischdüsenkammer direkt und nicht über das Ventilelement 20 erfolgt, in welchem Fall dann die Luftzufuhr bei der Erzeugung von warmem Milchschaum nicht durch ein separates Mittel regelbar ist.

Es kann vorgesehen sein, dass der Benutzer auch kalte Milch bloss fördern kann. In diesem Fall wird die Zahnradpumpe angetrieben, es bleiben aber die Ventilelemente geschlossen, und es wird auch kein Dampf zugeführt.

Weiter kann vorgesehen sein, dass der Benutzer warme Milch zubereiten kann. In diesem Fall ist das Ventilelement, durch welches Luft in die Mischdüse gelangen kann, verschlossen. Auch beim Vorsehen eines separaten Ventils für die Mischdüsenkammer (abweichend von der in den Figuren dargestellten Ausführungsform) besteht die Möglichkeit, das entsprechende Ventil verschliessbar auszugestalten. Ein Verschliessen des Ventils kann bspw. auch mechanisch von Hand durch den Benutzer vorgesehen sein. Zum Zubereiten von warmer Milch wird die Milch aus dem Milchbehälter 3 durch die Zahnradpumpe gefördert und gleichzeitig in der Mischdüse 79 Wasserdampf zugeführt ohne dass auch Luft zugeführt würde. Durch das Vermischen der kalten Milch mit dem Wasserdampf entsteht warme Milch, die dann über den Milchschaumauslauf 28 abgegeben wird.

Zum Reinigen an Ort und Stelle wird ein Gefäss unter den Milchschaumauslauf 28 gestellt, und es wird durch die Durchführungsleitung 96 und die Heisswasser-und/oder Dampfeinspeisungsleitung 32 warmes Wasser oder Dampf zugeführt. Gleichzeitig wird die Zahnradpumpe in Gang gesetzt.

Das Milchschäumergerät ist jedoch auch sehr einfach zu reinigen, nachdem es entfernt wurde. Der Milchbehälter 3 und der Deckel 6 können problemlos spülmaschinenfest ausgestaltet sein. Die Milchschäumeinheit 5 kann ebenfalls einfach auseinander genommen und gereinigt werden, wobei sehr nützlich ist, dass die Dichtung 21 mit den Lippenventilen 41, 42, 43 einstückig ist und bündig mit der Oberfläche des oberen Grundgehäuseteils 14 abschliesst.

Das Andockelement schliesslich ist deshalb einfach zu reinigen, weil die mit Milch in Berührung kommenden Teile (Grundkörper 25, Ergänzungsteil 27) einfach auseinander genommen werden können, spülmaschinenfest ausgestaltet sein können und auch einfach und nur in einer einzigen - richtigen - Konfiguration wieder zusammengesetzt werden können.

Viele Varianten sind denkbar. Nebst den bereits diskutierten Optionen besteht auch die Möglichkeit, die Leitungen für kalten Milchschaum (von der Pumpe her) und für warmen Milchschaum (in der Mischdüse hergestellt) bis zum Auslauf voneinander separat zu halten, d.h. der kalte Milchschaum wird dann nicht durch die Mischdüse geleitet. Der Milchschaumauslauf kann dann voneinander separate Öffnungen für den kalten und den warmen Milchschaum aufweisen, bspw. zueinander konzentrisch. Auch gänzlich separate Milchschaumausläufe für den kalten und den warmen Milchschaum sind denkbar; in diesem Fall gelten beispielsweise die vorstehend diskutierten optionalen Bedingungen für den Maximalabstand zwischen dem Milchschaumauslauf und dem Heissgetränkeauslauf für den Auslauf des warmen Milchschaums, da es oft dieser ist, der mit dem Heissgetränk gemischt wird.

### Bezugszeichenliste:

- 1: Milchschäumergerät
- 3: Milchbehälter
- 5: Milchschäumeinheit
- 6: Deckel
- 7: Zahnradpumpe
- 11: unteres Grundgehäuseteil
- 12: Fenster
- 13: Elektromotor
- 14: oberes Grundgehäuseteil
- 15: Wölbung (im Milchschäumeinheit-Deckel)
- 16: Milchschäumeinheit-Deckel
- 17: Zahnräder
- 18: Milchansaugrohr
- 19: Welle
- 20: Ventileinheit
- 21: Dichtung
- 22: Anschlussformteil
- 23: Abstandhalter
- 24: Motordichtungselement
- 25: Grundkörper (des Andockelements)
- 26: Andockelementgehäuse
- 27: Ergänzungsteil
- 28: Milchschaumauslauf
- 29: Endfläche
- 31: Flüssigkeitsleitung
- 32: Heisswasser- und/oder Dampfeinspeisungsleitung
- 34: Luftzuführleitung
- 35: Wegführleitung
- 36: Durchführung
- 41: Lippenventil
- 42: Lippenventil
- 43: Lippenventil
- 51: Kanal für die Heisswasser- und/oder Dampfeinspeisungsleitung
- 52: Kanal für die Luftzuführleitung
- 53: Kanal für die Wegführleitung
- 61: Ventilgehäuse
- 62: Verschlusselement
- 63: Dichtungselement
- 64: Elektromagnet
- 65: Feder
- 66: Sicherungsring
- 67: Dichtungspartie
- 68: Dichtung
- 71: Ventilkammer
- 73: Luftanschlussstutzen
- 79: Mischdüse
- 80: flächige Abschnitte
- 81: Gelenk
- 82: Luftdurchführung
- 83: Durchführung (für Milch)
- 84: Durchführung für Heisswasser oder Dampf
- 85: Durchführung für Dampf
- 86: Durchführung für Heisswasser oder Dampf
- 87: Lippenventil
- 88: Lippenventil
- 89: Mischdüsenelement
- 90: (Ring-)Struktur für Positionierring
- 91: Milchschaumauslauffortsatz
- 92: Öffnung für Luftzufuhr
- 93: Öffnung für Milchzufuhr
- 94: Positionierring
- 95: Dampfanschlussöffnung
- 96: Durchführungsleitung
- 97: Mischdüsenkammer
- 98: (elektrische) Kontakte
- 99: Mischdüsenöffnung
- 100: Getränkezubereitungssystem
- 101: Kaffeemaschine
- 103: Abstellplattform
- 105: Kaffeeauslauf
- 106: Front
- 107: Milchschäumerplattform
- 108: Auslaufhaube
- 110: Anschlussstelle
- 110': alternative Schnittstelle
- 111: Dampfabgabestelle
- 112: Heisswasser- und/oder Dampfabgabestelle
- 113: elektrische Kontakte
- 121: Elektronikeinheit
- 195: Ansteuerung
- 195': alternative Ansteuerung
- 200: Trinkgefäss

## Patentansprüche

1. Gerät (1) zum Zubereiten von geschäumter Milch, aufweisend einen Behälter (3) zum Aufnehmen von Milch und ein elektrisch betriebenes Antriebsmittel zum Fördern und/oder Schäumen der Milch **gekennzeichnet durch** ein Andockelement zum Anschliessen an eine Getränkezubereitungsmaschine (101) welches Andockelement enthält:
- Einen Anschluss für von der Getränkezubereitungsmaschine abgegebenen Wasserdampf;
- Eine Schnittstelle (98) für von der Getränkezubereitungsmaschine abgegebenen elektrischen Strom zum Betreiben des Antriebsmittels; und
- Einen Milchschaumauslauf (28) für die geschäumte Milch.

2. Gerät nach Anspruch 1, wobei ein Abstand zwischen dem Milchschaumauslauf (28) einerseits und einer Ebene einer Endfläche (29) des Andockelements andererseits, welche Endfläche den Anschluss für den Wasserdampf und die elektrische Schnittstelle enthält, maximal 2.5 cm beträgt.

3. Gerät nach Anspruch 1 oder 2, wobei das Andockelement als zusammenhängendes körperhaftes Element ausgebildet ist, in dessen Innern Leitungen für die Milch und den Wasserdampf verlaufen.

4. Gerät nach Anspruch 3, wobei das Andockelement einen Andockelementkörper (25) aufweist, der als Formkörper aus einem Kunststoff ausgebildet ist und mindestens eine Leitung für Milch bildet.

5. Gerät nach Anspruch 3 oder 4, wobei das Andockelement einen Grundkörper (25) mit einer Mehrzahl von Fluidkanälen (92, 93, 95, 96, 99) und ein vom Grundkörper reversibel entfernbares Ergänzungsteil (27) aufweist, wobei das Ergänzungsteil ein im Vergleich zum Grundkörper weicheres Material aufweist, zusammenhängend ist und mehrere in die Fluidkanäle eingreifende, von Milch, Wasserdampf, Wasser und/oder Luft durchströmbare Elemente (27, 82-89) aufweist.

6. Gerät nach einem der vorangehenden Ansprüche, aufweisend eine Milchschäumeinheit (5) mit einer Zahnradpumpe, die eingangsseitig mit einer Milchzuführleitung (31) und einer Luftzuführung (20, 43) verbunden ist.

7. Gerät nach einem der vorangehenden Ansprüche, aufweisend eine Mischdüse (79), in welcher Wasserdampf mit der Milch und beispielsweise zur Zubereitung von warmer geschäumter Milch auch mit Luft zusammenführbar ist, wobei die Mischdüse im Andockelement angeordnet und beispielsweise unmittelbar über dem Milchschaumauslauf angeordnet ist.

8. Gerät nach Anspruch 7, wobei die Mischdüse eingerichtet ist aufgrund einer Strömung des Wasserdampfs eine Saugwirkung auf angesaugte Luft und/oder auf in die Mischdüse einströmende Milch auszuüben.

9. Gerät nach einem der vorangehenden Ansprüche, wobei das Andockelement einen weiteren Anschluss für von der Getränkezubereitungsmaschine abgegebenes Reinigungswasser und/oder Reinigungsdampf aufweist, von welchem aus eine Reinigungswasser- und/oder -dampfleitung (96) das Andockelement durchquert.

10. Getränkezubereitungsmaschine (101) zum Zubereiten eines Heissgetränks und zum Anschliessen eines Geräts nach einem der vorangehenden Ansprüche, aufweisend eine Abgabestelle (111) für Wasserdampf zum Koppeln an den Dampfanschluss und eine getränkezubereitungsmaschinenseitige elektrische Schnittstelle (113) zum Koppeln an die Schnittstelle (98) des Geräts, wobei die Abgabestelle (111) und die getränkezubereitungsmaschinenseitige Schnittstelle (113) so angeordnet sind, dass sie durch den Anschluss beziehungsweise die Schnittstelle (91) des Andockelements kontaktierbar sind.

11. Getränkezubereitungsmaschine nach Anspruch 10, wobei ein Getränkeauslauf (105) für das Heissgetränk in unmittelbarer Nähe der Abgabestelle (111) angeordnet ist.

12. Getränkezubereitungsmaschine nach Anspruch 10 oder 11, aufweisend eine Front mit einer von einer Front vorstehenden Abstellplattform (103) für ein Trinkgefäss einer über der Abstellplattform von der Front vorstehenden Getränkeauslaufhaube (108), wobei eine Andockstelle mit der Abgabestelle (111) und der getränkezubereitungsmaschinenseitigen Schnittstelle (113) seitlich an der Getränkeauslaufhaube (108) vorhanden ist.

13. Getränkezubereitungssystem, aufweisend ein Gerät nach einem der Ansprüche 1 bis 9 sowie eine Getränkezubereitungsmaschine nach einem der Ansprüche 10-12.

14. Getränkezubereitungssystem nach Anspruch 13, wobei das Getränkezubereitungssystem eine Abstellplattform (103) für ein Trinkgefäss aufweist und im angedockten Zustand des Geräts sowohl der Milchschaumauslauf (28) als auch der Getränkeauslauf (105) der Getränkezubereitungsmaschine vertikal oberhalb der Abstellplattform (103) angeordnet sind.

15. Getränkezubereitungssystem nach Anspruch 14, wobei im angedockten Zustand ein horizontaler Abstand zwischen dem Milchschaumauslauf (28) und dem Getränkeauslauf (105) höchstens 5 cm beträgt.
